# EUROPÄISCHE PATENTSCHRIFT

(11) **EP 3 789 741 B1**
(45) Veröffentlichungstag und Bekanntmachung des Hinweises auf die Patenterteilung: **30.04.2025**
(21) Anmeldenummer: 20191486.8
(22) Anmeldetag: 18.08.2020
(51) Int. Cl.: G01F 1/58

(54) **MAGNETISCH-INDUKTIVES DURCHFLUSSMESSGERÄT UND MAGNETKREISVORRICHTUNG**
MAGNETIC-INDUCTIVE FLOW METER AND MAGNETIC CIRCUIT DEVICE
DÉBITMÈTRE À INDUCTION MAGNÉTIQUE ET DISPOSITIF DE CIRCUIT MAGNÉTIQUE

(30) Priorität: 03.09.2019 DE 102019123528
(43) Veröffentlichungstag der Anmeldung: 10.03.2021
(73) Patentinhaber: Krohne AG, 4019 Basel (CH)
(72) Erfinder: Gonzalez-Pelayo, Juan Carlos, 4194 TX Meteren (NL); Paul, Christian, 3069 HP Rotterdam (NL); Neven, Joseph, 26100 Romans (FR)
(74) Vertreter: Gesthuysen Patentanwälte

(56) Entgegenhaltungen:
- CN-U- 206 300 690
- DE-A1- 102017 131 202
- DE-A1- 2 263 717
- DE-A1- 2 401 811

## Beschreibung

Die Erfindung betrifft ein magnetisch-induktives Durchflussmessgerät, mit einem Messrohr zum Führen eines elektrisch leitfähigen Mediums, mit einer außerhalb des Messrohrs verlaufenden Magnetkreisvorrichtung zur Erzeugung und zur Führung eines das Messrohr zumindest teilweise senkrecht zur Strömungsrichtung des Mediums durchsetztenden Magnetfeldes und mit zwei Elektroden zum Abgreifen einer in dem Medium induzierten Messspannung, wobei die Magnetkreisvorrichtung wenigstens eine erste Spule zur Erzeugung des Magnetfeldes und eine erste Polschuhplatte und eine zweite Polschuhplatte aufweist, wobei sich zwischen den Polschuhplatten das Magnetfeld ausbildet, wobei das Messrohr zwischen den beiden Polschuhplatten angeordnet ist und wobei die Elektroden auf einander gegenüberliegenden Seiten des Messrohres angeordnet sind und eine gedachte Verbindungslinie zwischen den beiden Elektroden senkrecht zur Strömungsrichtung und senkrecht zur Magnetfeldrichtung verläuft, wobei jede Polschuhplatte eine der ersten Spule zugewandte erste Seite und eine der ersten Seite gegenüberliegende zweite Seite aufweist und dass zur Einspeisung des Magnetfeldes in die Polschuhplatten an den ersten Seiten der Polschuhplatten jeweils wenigstens zwei Einspeisebereiche pro Polschuhplatte ausgebildet sind. Zudem betrifft die Erfindung eine Magnetkreisvorrichtung gemäß dem Oberbegriff des Patentanspruchs 1.

In Rede stehenden magnetisch-induktiven Durchflussmessgeräte sind in einer Vielzahl aus dem Stand der Technik bekannt und dienen zur Bestimmung des Durchflusses eines Mediums. Das der Durchflussmessung zugrunde liegende Messprinzip beruht auf dem Prinzip der Ladungstrennung von Teilchen in einem Magnetfeld. Die Ladungstrennung führt zu einer induzierten Spannung - der Messspannung -, die proportional zur Strömungsgeschwindigkeit der in dem Medium bewegten Ladungsträger ist, so dass aus der Strömungsgeschwindigkeit auf den Durchfluss im Messrohr geschlossen werden kann. Das Prinzip der Ladungstrennung setzt voraus, dass die Strömungsrichtung des Mediums im Messrohr und die Orientierung des das Medium durchsetzenden Magnetfeldes nicht gleich orientiert sind. Zwar ist eine senkrechte Ausrichtung von Messrohren und Magnetfeld wünschenswert, da dann der Effekt der Ladungstrennung am größten ist, jedoch nicht zwingend erforderlich. Wenn es heißt, dass die Magnetkreisvorrichtung ein das Messrohr zumindest teilweise senkrecht zur Strömungsrichtung durchsetzendes Magnetfeld erzeugt, dann ist hiermit unter verständiger Würdigung gemeint, dass das Magnetfeld das Messrohr "im Wesentlichen senkrecht" durchsetzt, zumindest jedoch eine Komponente des Magnetfeldes das Messrohr senkrecht zur Strömungsrichtung durchsetzt.

Magnetkreisvorrichtungen weisen wenigstens eine das Magnetfeld erzeugende Spule auf. Das erzeugte Magnetfeld wird meist über magnetfeldführende Elemente zu den Polschuhen geführt. Die Polschuhe dienen dazu, die Magnetfeldlinien des Magnetfeldes in definierter Art und Weise aus dem Magnetkreis austreten zu lassen; der Raum zwischen den Polschuhen wird von dem Magnetfeld durchsetzt. Bevorzugt werden die Polschuhe bei magnetisch-induktiven Durchflussmessgeräten durch Polschuhplatten realisiert, die eine relativ geringe Dicke aufweisen, sodass im Folgenden von Polschuhplatten die Rede ist. Die Erfindung ist jedoch auch auf andere Formen von Polschuhen übertragbar.

Aus der DE 10 2012 014 266 A1 ist ein in Rede stehendes magnetisch-induktives Durchflussmessgerät bekannt. Die Magnetkreisvorrichtung des hier beschriebenen magnetisch-induktiven Durchflussmessgerätes umfasst neben den beiden Polschuhplatten insgesamt vier Spulen, die das Magnetfeld erzeugen. Je zwei Spulen sind auf einander gegenüberliegenden Seiten des Messrohres und der Polschuhplatten angeordnet. Die beiden Spulen einer jeden Seite sind in Serie zueinander angeordnet, wobei eine Elektrode zwischen den beiden Spulen angeordnet ist. Die Spulen sind durch je ein Jochelement zum einen miteinander, zum anderen mit je einer Polschuhplatte verbunden, so dass insgesamt eine geschlossene Magnetkreisvorrichtung realisiert ist. Das in den Spulen erzeugte Magnetfeld, bzw. die Magnetfeldlinien des Magnetfeldes, wird über die Jochelemente mittig auf der den Spulen zugewandten Seite der Polschuhplatten in die Polschuhplatten eingespeist.

Aus der DE 10 2017 131 202 A1 ist ein magnetisch-induktives Durchflussmessgerät bekannt, bei dem die Magnetkreisvorrichtung eine Mehrzahl an Spulen und eine Mehrzahl an Rückführungsblechen zur Feldführung aufweist. Die Rückführungsbleche sind durch die Spulen geführt und bilden abschnittsweise den Spulenkern. Pro Rückführungsblech sind zwei kurze Spulen vorgesehen, die auf dem Rückführungsblech hintereinander angeordnet sind.

Auch aus der DE 24 01 811 A1 ist ein magnetisch-induktives Durchflussmessgerät bekannt, das eine Magnetkreisvorrichtung zur Erzeugung und Führung eines Magnetfeldes aufweist. Die Magnetkreisvorrichtung weist zwei Magnetjoche auf, um die jeweils eine Spule gewickelt ist.

Da die Messgenauigkeit des magnetisch-induktiven Durchflussmessgerätes zum einen von der Magnetfeldstärke des erzeugten Magnetfeldes und zum anderen von der Homogenität des erzeugten Magnetfeldes abhängt, ist es fortwährendes Bestreben, die Homogenität des Magnetfeldes weiter zu optimieren, um zu besseren Messergebnissen zu gelangen. Auch die äußeren Dimensionierungen eines magnetisch-induktiven Durchflussmessgerätes sind in der Praxis von Relevanz; hier wird angestrebt, die Messgeräte selbst so kompakt wie möglich auszugestalten, damit sie so platzsparend wie möglich eingesetzt werden können.

Der Erfindung liegt demnach die Aufgabe zugrunde, ein magnetisch-induktives Durchflussmessgerät anzugeben, das durch eine verbesserte Messempfindlichkeit ausgezeichnet ist.

Die zuvor aufgezeigte und hergeleitete Aufgabe ist bei dem eingangs beschriebenen magnetisch-induktiven Durchflussmessgerät dadurch gelöst, dass die Spule als lange Spule ausgebildet ist, wobei die Länge der Spule wenigstens dem Zehnfachen des Durchmessers der Spule entspricht. Es ist zunächst erkannt worden, dass die Homogenität des zwischen den Polschuhplatten ausgebildeten Magnetfeldes im Wesentlichen abhängig ist von der Einspeisung des Magnetfeldes in die Polschuhplatten, nämlich insbesondere von der Anzahl der Einspeisebereiche, über die das Magnetfeld, bzw. die Magnetfeldlinien des durch die Spule erzeugten Magnetfeldes in die Polschuhplatten eingeleitet wird. Das durch die Spule erzeugte Magnetfeld wird also über wenigstens zwei Einspeisebereiche an den ersten Seiten der Polschuhplatten in die Polschuhplatten eingespeist.

Unter einem Einspeisebereich wird derjenige Bereich verstanden, an dem die Magnetfeldlinien in die Polschuhplatten eingeleitet werden. Konstruktiv ist der Einspeisebereich also derjenige Bereich, an dem die Polschuhplatten mit weiteren magnetfeldführenden oder magnetfelderzeugenden Elementen der Magnetkreisvorrichtung kontaktiert bzw. verbunden sind. Dadurch, dass die wenigstens zwei Einspeisebereiche an einer Seite und zudem an der gleichen Seite der Polschuhplatten ausgebildet sind, wird die Homogenität des Magnetfeldes zwischen den Polschuhplatten verbessert. Eine verbesserte Homogenität des Magnetfeldes resultiert in einer verbesserten Messempfindlichkeit des magnetisch-induktiven Durchflussmessgerätes.

Als besonders vorteilhaft hat sich eine derartige Ausgestaltung erwiesen, bei der die Einspeisebereiche randnah, nämlich jeweils im äußeren Viertel der Längserstreckung der ersten Seite der Polschuhplatten ausgebildet sind. Hierdurch ergibt sich nicht nur eine vorteilhafte Magnetfeldverteilung zwischen den Polschuhplatten, sondern ergeben sich auch konstruktive Vorteile, auf die weiter unten näher eingegangen wird.

Die Einspeisebereiche können auf verschiedene Art und Weise konstruktiv realisiert werden. In einer bevorzugten Ausgestaltung des magnetisch-induktiven Durchflussmessgerätes ist die Spule auf der Seite einer Elektrode angeordnet. In einer Ausgestaltung wird eine Spule zur Erzeugung des Magnetfeldes verwendet. Die Spule ist über ein im Wesentlichen Y-förmiges Jochelement mit der ersten Seite der ersten Polschuhplatte verbunden und über ein weiteres im Wesentlichen Y-förmiges Jochelement mit der ersten Seite der zweiten Polschuhplatte verbunden. Hierbei sind die Y-Arme der Jochelemente mit den Polschuhplatten verbunden, sodass je zwei Einspeisebereiche an den ersten Seiten der Polschuhplatten ausgebildet sind. Wenn die Rede von Y-förmigen Jochelementen ist, dann sind hierunter sämtliche Ausgestaltungen zu verstehen, bei denen sich das Jochelement zweiteilt. Beispielsweise fällt unter ein Y-förmiges Jochelement auch ein solches, bei dem der Y-Stamm geradlinig in den ersten Y-Arm übergeht, wohingegen der zweite Y-Arm selbst rechtwinklig ausgebildet ist und sich zudem rechtwinklig von dem Y-Stamm abzweigt. Beispielsweise kann das Jochelement entsprechend auch h-förmig ausgebildet sein. Bevorzugt sind die beiden Y-förmigen Jochelemente gleich ausgebildet.

Eine weitere besonders bevorzugte Ausgestaltung des magnetisch-induktiven Durchflussmessgerätes ist dadurch gekennzeichnet, dass die Magnetkreisvorrichtung eine zweite Spule aufweist, sodass das das Messrohr durchsetzende Magnetfeld von zwei Spulen erzeugt wird. Die zweite Spule ist in einer bevorzugten Ausgestaltung auf der der ersten Spule gegenüberliegenden Seite der Polschuhplatten angeordnet, die zweiten Seiten der Polschuhplatten sind demnach der zweiten Spule zugewandt. Zur Einspeisung des Magnetfeldes in die Polschuhplatten sind an den zweiten Seiten der Polschuhplatten jeweils wenigstens zwei weitere Einspeisebereiche pro Polschuhplatte ausgebildet. Das ist bevorzugt dadurch realisiert, dass auch die zweite Spule über ein erstes Y-förmiges Jochelement mit der ersten Seite der ersten Polschuhplatte verbunden und über ein zweites Y-förmiges Jochelement mit der ersten Seite der zweiten Polschuhplatte verbunden. Die Einspeisebereiche an der zweiten Seite der Polschuhplatten sind ebenfalls bevorzugt im äußeren Viertel der Längserstreckung der zweiten Seiten der Polschuhplatten ausgebildet. Insgesamt weist die Magnetkreisvorrichtung also zwei Spulen und wenigstens vier Einspeisebereiche pro Polschuhplatte auf, wobei je zwei Einspeisebereiche an den ersten Seiten der Polschuhplatten und zwei Einspeisebereiche an den zweiten Seiten der Polschuhplatten ausgebildet sind.

In einer weiteren bevorzugten Ausgestaltung des erfindungsgemäßen magnetisch-induktiven Durchflussmessgerätes weist die Magnetkreisvorrichtung ebenfalls zwei Spulen auf. Anders als in der zuvor beschriebenen Ausgestaltung ist die zweite Spule jedoch auf der gleichen Seite der Polschuhplatten angeordnet wie die erste Spule. Bevorzugt sind die beiden Spulen in Strömungsrichtung gesehen hintereinander angeordnet und weiter bevorzugt ist die Elektrode zwischen den Spulen angeordnet. Jede der beiden Spulen speist das Magnetfeld über wenigstens einen Einspeisebereich in die Polschuhplatten ein, sodass insgesamt wenigstens zwei Einspeisebereiche realisiert sind.

In einer weiteren Ausgestaltung des erfindungsgemäßen magnetisch-induktiven Durchflussmessgerätes weist die Magnetkreisvorrichtung vier Spulen auf, sodass das das Messrohr durchsetzende Magnetfeld von vier Spulen erzeugt wird. Hierbei sind auf jeder Seite des Messrohres, nämlich auf jeder Seite jeweils einer Elektrode, zwei Spulen angeordnet. Bevorzugt sind die beiden Spulen auf jeder Seite in Strömungsrichtung gesehen hintereinander angeordnet. Besonders bevorzugt ist weiter die Elektrode zwischen den beiden Spulen angeordnet, also in Strömungsrichtung gesehen hinter der ersten Spule und vor der zweiten Spule angeordnet.

In dieser Ausgestaltung ist weiter vorgesehen, dass jede Spule zumindest mittelbar über einen Einspeisebereich mit der ersten Polschuhplatte und über einen Einspeisebereich mit der zweiten Polschuhplatte verbunden ist. Bei den insgesamt vier Spulen sind somit an den ersten Seiten der Polschuhplatten wenigstens zwei Einspeisebereiche ausgebildet und an den zweiten Seiten der Polschuhplatten ebenfalls wenigstens zwei Einspeisebereiche ausgebildet.

Dadurch, dass die Einspeisebereiche bevorzugt in den Außenbereichen der ersten und der zweiten Seiten der Polschuhplatten ausgebildet sind, und die Spulen neben der Elektrode - also in Strömungsrichtung gesehen vor und hinter der Elektrode - angeordnet sind, ergibt sich der Vorteil, dass für die Spulen viel Bauraum zur Verfügung steht, die Spulen insbesondere sich von der ersten Polschuhplatte zur zweiten Polschuhplatte erstreckend ausgebildet sein können.

Erfindungsgemäß ist die wenigstens eine erste Spule als lange Spule ausgebildet. Unter einer langen Spule ist eine derartige Spule zu verstehen, deren Länge wesentlich größer ist als deren Durchmesser. Erfindungsgemäß entspricht die Länge der Spule hierbei wenigstens dem Zehnfachen des Durchmessers der Spule. Insbesondere ist das Verhältnis von Länge der Spule zu deren Durchmesser, ab dem man von einer langen Spule spricht, abhängig von der Nennweite der jeweiligen Spule. Bei Nennweiten DN 150 spricht man von einer langen Spule, wenn die Länge der Spule wenigstens dem Zehnfachen des Durchmessers entspricht. Bei Nennweiten DN 600 und grö-ßer spricht man von einer langen Spule, wenn die Länge der Spule wenigstens dem Zwanzigfachen des Durchmessers entspricht. Lange Spulen weisen gegenüber kurzen Spulen, deren Länge in der gleichen Größenordnung wie der Spulenradius liegt, den Vorteil auf, dass das Magnetfeld im Inneren der Spule homogen ist, bzw. deutlich homogener als das Magnetfeld im Inneren einer kurzen Spule ist. Zudem treten bei langen Spulen deutlich geringere unerwünschte Streufelder auf, wodurch durch die Verwendung von langen Spulen die Störanfälligkeit gegenüber Streufeldern reduziert werden kann. Aufgrund der deutlich geringeren Streufelder können Abschirmmaßnahmen zum Abschirmen der Streufelder vereinfacht realisiert werden oder kann auf die Verwendung von Abschirmmaßnahmen zum Abschirmen der Streufelder verzichtet werden. Die erfindungsgemäße Ausgestaltung unterscheidet sich damit wesentlich von dem in der Beschreibungseinleitung dargelegten magnetisch-induktiven Durchflussmessgerät aus dem Stand der Technik, bei dem die Spulen zwischen Elektrode und Polschuhplatte angeordnet sind und somit an den begrenzten Platz angepasst ausgebildet sind. Lange Spulen weisen zudem den Vorteil auf, dass sie materialsparend hergestellt werden können.

Bei der zuvor beschriebenen bevorzugten Ausgestaltung des erfindungsgemäßen magnetisch-induktiven Durchflussmessgerätes besteht ebenfalls die Möglichkeit, die Spulen über Jochelemente, insbesondere auch über Y-förmige Jochelemente mit den Polschuhplatten zu verbinden. Bei der Verwendung von Y-förmigen Jochelementen können dann auf einfache Art und Weise mehr als zwei Einspeisebereiche pro Seite einer Polschuhplatte realisiert werden.

Vorteilhaft ist es, eine Magnetkreisvorrichtung eines magnetisch-induktiven Durchflussmessgerätes konstruktiv so einfach wie möglich auszugestalten, insbesondere die Anzahl der verwendeten Bauteile weitestgehend zu minimieren, um auch hierdurch die Homogenität des Magnetfeldes weiter zu erhöhen, da durch Verbindungsabschnitte bzw. Verbindungspunkte zwischen zwei Bauteilen störende Wirbelfelder erzeugt werden können. In einer weiteren Ausgestaltung des magnetisch-induktiven Durchflussmessgerätes sind die Spulen unmittelbar mit den Polschuhplatten verbunden. Wenn die Rede davon ist, dass die Spule unmittelbar mit den Polschuhplatten verbunden ist, dann ist hiermit gemeint, dass keine separaten Jochelemente Verwendung finden. Hierdurch kann die Anzahl der Verbindungspunkte in der Magnetkreisvorrichtung reduziert werden. Bevorzugt ist vorgesehen, dass die Spulen jeweils einen Spulenkern aufweisen und dass der Spulenkern mit den Polschuhplatten verbunden ist. Unter dem Spulenkern wird hier der Abschnitt verstanden, der mit den Windungen der Spule umgeben ist, wobei sich der Spulenkern sich auch unwesentlich über die Windungen der Spule hinaus erstrecken kann. Die Länge der Erstreckung des Spulenkerns über die Windungen hinaus beträgt bevorzugt weniger als ein Zehntel der Länge des mit den Windungen umgebenen Abschnitts des Spulenkerns. Die Länge ist insbesondere nur so weit zu wählen, dass eine Verbindung mit den Polschuhplatten gerade eben möglich ist.

In einer besonders bevorzugten Ausgestaltung weist der Spulenkern eine Ausnehmung auf, in die die Polschuhplatte eingeführt ist. Vorteilhaft ist die Ausnehmung schlitzartig ausgebildet, wobei die Breite der schlitzartigen Ausnehmung bevorzugt im Wesentlichen der Dicke der Polschuhplatte entspricht, sodass die Polschuhplatte in die schlitzartige Ausnehmung eingesteckt werden kann. Bevorzugt ist die Polschuhplatte dafür an ihrer ersten Seite entsprechend umgebogen.

In einer weiteren Ausgestaltung sind die Spulen bogenförmig, insbesondere kreisbogenförmig ausgebildet. Besonders bevorzugt entspricht der Biegeradius der Spulen dem Außenradius des Messrohres, sodass die Spulen bauraumsparend an dem Messrohr angeordnet werden können.

Aus dem Stand der Technik ist bekannt, Messrohre derart auszugestalten, dass sie einen Messabschnitt mit einem im Wesentlichen rechteckigen Querschnitt - senkrecht zur Strömungsrichtung - aufweisen, wobei der Messabschnitt des Messrohres der Bereich des Messrohres ist, der von dem Magnetfeld durchsetzt wird. Wenn die Rede von einem in Wesentlichen rechteckigen Querschnitt ist, dann sind die Messrohre meist so realisiert, dass die Längsseiten des rechteckigen Querschnitts parallel zueinander angeordnet sind, wobei die Kurzseiten des Querschnitts nicht zwingend gerade ausgebildet sein müssen. Vielmehr sind die Kurzseiten meist kreisbogenförmig ausgebildet. Bei einem derartigen Messrohr sind die Elektroden an den kurzen Querschnittsseiten des Messabschnitts angeordnet. Weiter ist bei Durchflussmessgeräten mit einem derartigen Messrohr vorgesehen, dass die Polschuhplatten an den Längsseiten des Messabschnitts angeordnet sind, also an den langen Seiten des rechteckigen Querschnitts. Eine Ausgestaltung des erfindungsgemäßen magnetisch-induktiven Durchflussmessgerätes ist dadurch ausgezeichnet, dass das magnetisch-induktive Durchflussmessgerät ein Messrohr mit einem im Wesentlichen rechteckigen Messrohrquerschnitt aufweist, wobei die Polschuhplatten an den Längsseiten des Messabschnitts angeordnet sind. Um den Messabschnitt mechanisch zu verstärken, sind im Messabschnitt Verstärkungsrippen ausgebildet. Die Verstärkungsrippen sind bevorzugt auf den Längsseiten des Messabschnitts ausgebildet. Erfindungsgemäß sind in den Polschuhplatten, die an den beiden Längsseiten des Messabschnitts angeordnet sind, insbesondere auf den Messabschnitten aufliegen, zu den Verstärkungsrippen korrespondierende Ausnehmungen zur Aufnahme der Verstärkungsrippen ausgebildet. Hierdurch ist es möglich, die Polschuhplatten so nah wie möglich am Messrohr anzuordnen, wodurch der Abstand der beiden Polschuhplatten zueinander minimiert werden kann. Je nach Ausgestaltung der Verstärkungsrippen und der korrespondierenden Ausnehmungen in den Polschuhplatten können die Verstärkungsrippen eine Fixierfunktion für die Polschuhplatten ausüben.

In einer weiteren Ausgestaltung ist vorgesehen, dass das Messrohr Positionierelemente aufweist und dass in den Polschuhplatten Positionierausnehmungen für die Positionierelemente ausgebildet sind. Im Gegensatz zu den Verstärkungsrippen haben die Positionierelemente keine das Messrohr bzw. den Messabschnitt verstärkende Funktion, sondern dienen zur Positionierung der Magnetkreisvorrichtung und insbesondere zur Fixierung der Polschuhplatten.

Durch die Ausbildung der Ausnehmungen in den Polschuhplatten werden zudem Streufelder und Wirbelströme in den Polschuhplatten reduziert. Hierdurch wird die Homogenität des Magnetfeldes weiter erhöht. Zudem ist aufgrund der geringeren Streufelder und Wirbelströme ein schnelleres Umschalten des Magnetfeldes möglich.

Eine konstruktiv besonders bevorzugte Ausgestaltung des magnetisch-induktiven Durchflussmessgerätes weist sich dadurch aus, dass die erste Polschuhplatte und die zweite Polschuhplatte jeweils aus einer ersten Polschuhteilplatte und aus einer zweiten Polschuhteilplatte gebildet sind. Die erste Polschuhteilplatte der ersten Polschuhplatte und die erste Polschuhteilplatte der zweiten Polschuhplatte sind über magnetfeldführende Elemente der Magnetkreisvorrichtung, insbesondere durch eine oder mehrere Spulen und/oder ein oder mehrere magnetfeldführende Jochelemente miteinander verbunden, ebenso sind die zweite Polschuhteilplatte der ersten Polschuhplatte und die zweite Polschuhteilplatte der zweiten Polschuhplatte über magnetfeldführende Elemente der Magnetkreisvorrichtung, insbesondere durch eine oder mehrere Spulen und/oder eine oder mehrere magnetfeldführende Jochelemente miteinander verbunden, sodass die Magnetkreisvorrichtung insgesamt zweiteilig ausgebildet ist. Diese konstruktive Ausgestaltung hat den besonderen Vorteil, dass die Montage des magnetisch-induktiven Durchflussmessgeräte erheblich vereinfacht wird. Die beiden Teile der Magnetkreisvorrichtung können vorgefertigt werden und dann nur noch auf das Messrohr des magnetisch-induktiven Durchflussmessgerätes aufgesteckt werden. Weisen die Polschuhteilplatten zudem die zuvor beschriebene Positionierausnehmungen auf, können nach dem Aufstecken der Teile der Magnetkreisvorrichtung die Positionierelemente durch die Positionierausnehmungen greifen, so dass die beiden Teile der Magnetkreisvorrichtung am Messrohr fixiert angeordnet sind.

Durch die zweiteilige Ausgestaltung der Polschuhplatten wird die Ausbildung von Streufeldern und Wirbelströmen noch weiter unterbunden.

Bei einer Ausgestaltung, bei der die Magnetkreisvorrichtung vier Spulen aufweist, sind die jeweiligen Polschuhteilplatten beispielsweise über je zwei Spulen miteinander verbunden. Die zweite Polschuhteilplatte der ersten Polschuhplatte und die zweite Polschuhteilplatte der zweiten Polschuhteilplatte sind dann ebenfalls über zwei Spulen miteinander verbunden.

Die Erfindung betrifft nicht nur ein magnetisch-induktives Durchflussmessgerät, sondern zudem eine Magnetkreisvorrichtung für ein magnetisch-induktives Durchflussmessgerät. Die erfindungsgemäße Magnetkreisvorrichtung dient zur Erzeugung und zur Führung eines Magnetfeldes und weist wenigstens eine erste Spule zur Erzeugung des Magnetfeldes und eine erste Polschuhplatte und eine zweite Polschuhplatte auf, wobei sich zwischen den Polschuhplatten das Magnetfeld ausbildet. Zwischen den Polschuhplatten kann ein Messrohr eines magnetisch-induktiven Durchflussmessgerätes angeordnet werden, so dass im Betriebszustand dieses Messrohr von dem Magnetfeld durchsetzt werden würde.

Bei der Magnetkreisvorrichtung weist jede Polschuhplatte eine der ersten Spule zugewandte erste Seite und eine der ersten Seite gegenüberliegende zweite Seite auf. Zur Einspeisung des Magnetfeldes in die Polschuhplatten sind an den ersten Seiten der Polschuhplatten jeweils wenigstens zwei Einspeispunkte pro Polschuhplatte ausgebildet. Erfindungsgemäß ist die Spule als lange Spule ausgebildet, wobei die Länge der Spule wenigstens dem Zehnfachen des Durchmessers der Spule entspricht.

Die erfindungsgemäße Magnetkreisvorrichtung kann insbesondere nach einem der die Magnetkreisvorrichtung charakterisierenden Merkmale der zuvor beschriebenen Magnetkreisvorrichtung des erfindungsgemäßen magnetisch-induktiven Durchflussmessgerätes ausgestaltet sein. Demnach gelten sämtliche in Verbindung mit der die Magnetkreisvorrichtung des erfindungsgemäßen magnetisch-induktiven Durchflussmessgerätes gemachten Ausführungen bezüglich verschiedener Ausgestaltungen mit ihren Vorteilen entsprechend für die erfindungsgemäße Magnetkreisvorrichtung.

Im Einzelnen gibt es nun eine Vielzahl von Möglichkeiten, das erfindungsgemäße magnetisch-induktive Durchflussmessgerät und die erfindungsgemäße Magnetkreisvorrichtung auszugestalten und weiterzubilden. Hierzu wird verwiesen auf die den unabhängigen Patentansprüchen nachgeordneten Patentansprüche sowie auf die Beschreibung bevorzugter Ausgestaltungen in Verbindung mit der Zeichnung. In der Zeichnung zeigen
- Fig. 1: eine erste Ausgestaltung eines magnetisch-induktiven Durchflussmessgerätes mit einer ersten Ausgestaltung einer Magnetkreisvorrichtung,
- Fig. 2: eine zweite Ausgestaltung einer Magnetkreisvorrichtung,
- Fig. 3: eine dritte Ausgestaltung einer Magnetkreisvorrichtung,
- Fig. 4: ein magnetisch-induktives Durchflussmessgerät mit einer vierten Ausgestaltung einer Magnetkreisvorrichtung,
- Fig. 5: die Magnetkreisvorrichtung aus Fig. 4 in einer ersten perspektivischen Ansicht,
- Fig. 6: die Magnetkreisvorrichtung aus Fig. 4 in einer zweiten perspektivischen Ansicht,
- Fig. 7: die Magnetkreisvorrichtung aus Fig. 4 in einer dritten perspektivischen Ansicht,
- Fig. 8: eine fünfte Ausgestaltung einer Magnetkreisvorrichtung,
- Fig. 9: ein Messrohr eines magnetisch-induktiven Durchflussmessgerätes und
- Fig. 10: eine sechste Ausgestaltung einer Magnetkreisvorrichtung.

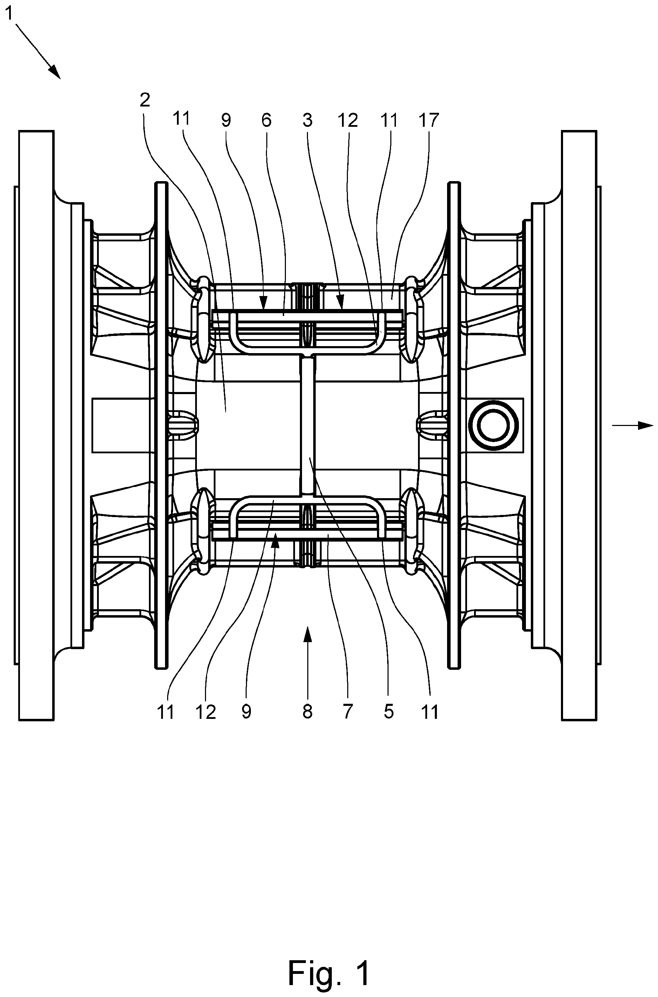

Fig. 1 zeigt ein magnetisch-induktives Durchflussmessgerät 1 mit einem Messrohr 2, wobei das Messrohr 2 zur Führung eines elektrisch leitfähigen Mediums dient. Das magnetisch-induktive Durchflussmessgerät 1 weist eine außerhalb des Messrohres 2 verlaufenden Magnetkreisvorrichtung 3 zur Erzeugung und zur Führung eines das Messrohr 2 zumindest teilweise senkrecht zur Strömungsrichtung des Mediums durchsetzenden Magnetfeldes auf. Die Strömungsrichtung des Mediums ist durch den Pfeil gekennzeichnet. Zudem weist das magnetisch-induktive Durchflussmessgerät 1 zwei Elektroden 4 auf, die zum Abgreifen einer in dem Medium induzierten Messspannung dienen. Die Elektroden 4 sind in der Fig. 1 nicht sichtbar. Die Magnetkreisvorrichtung 3 weist weiterhin eine Spule 5 zur Erzeugung des Magnetfeldes und eine erste Polschuhplatte 6 und eine zweite Polschuhplatte 7 auf, wobei das Messrohr 2 mit einem Messabschnitt 8 zwischen den beiden sich einander gegenüberliegenden Polschuhplatten 6, 7 angeordnet ist. Zwischen den Polschuhplatten 6, 7 bildet sich das Magnetfeld aus, welches das Messrohr 2 durchsetzt. Die beiden Elektroden 4 sind ebenfalls auf einander gegenüberliegenden Seiten des Messrohres 2 angeordnet, wobei eine gedachte Verbindungslinie, die nicht dargestellt ist, zwischen den beiden Elektroden 4 senkrecht zur Strömungsrichtung und senkrecht zur Magnetfeldrichtung verläuft.

Die beiden Polschuhplatten 6, 7 sind derart ausgestaltet, dass sie eine erste Seite 9 und eine zweite Seite 10 aufweisen, wobei die ersten Seiten 9 der Polschuhplatten 6, 7 der Spule 5 zugewandt und die zweiten Seiten 10 den ersten Seiten 9 gegenüberliegen, demnach auf der der Spule 5 abgewandten Seite der Polschuhplatten 6, 7 liegen. Zur Einspeisung des in der Spule 5 erzeugten Magnetfeldes in die Polschuhplatten 6, 7 sind an den ersten Seiten 9 der beiden Polschuhplatten 6, 7 jeweils zwei Einspeisebereiche 11 pro Polschuhplatte 6, 7 ausgebildet. Die Einspeisebereiche 11 liegen hierbei jeweils im äu-ßeren Viertel der Längserstreckung der ersten Seiten 9 der Polschuhplatten 6, 7. Die Einspeisebereiche 11 sind demnach in der Randregion der Polschuhplatten 6, 7 ausgebildet. Durch diese Ausgestaltung der Magnetkreisvorrichtung 3 wird erreicht, dass sich zwischen den beiden Polschuhplatten 6, 7 ein homogenes Magnetfeld ausbildet. Um das Magnetfeld, das in der Spule 5 erzeugt wird, in die Polschuhplatten 6, 7 einzuspeisen, ist die Spule 5 über je ein Y-förmiges Jochelement 12 sowohl mit der ersten Polschuhplatte 6 als auch mit der zweiten Polschuhplatte 7 verbunden.

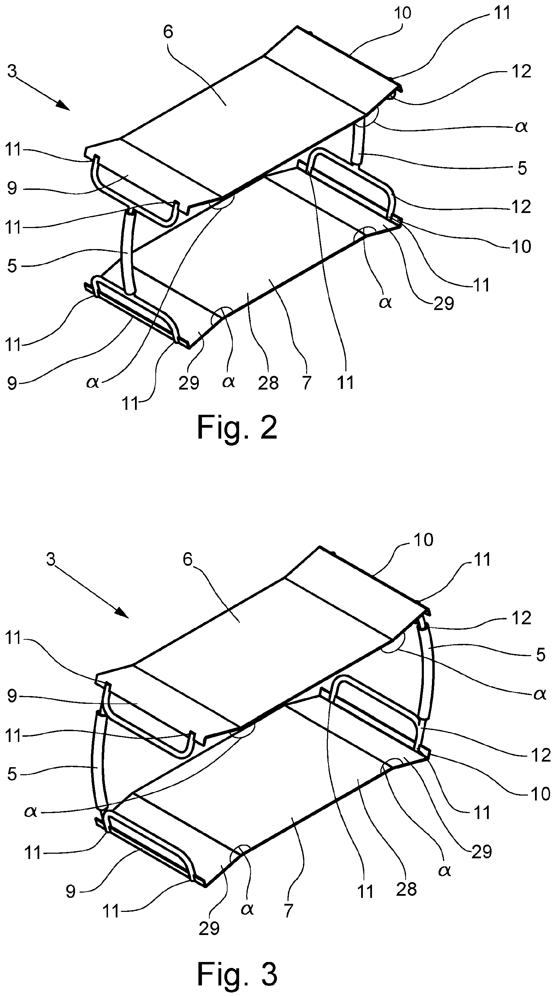

In Fig. 2 ist eine weitere Ausgestaltung einer Magnetkreisvorrichtung 3 dargestellt. Bei der dargestellten Ausgestaltung weist die Magnetkreisvorrichtung zwei Spulen 5 auf, sodass das das Messrohr 2 durchsetzende Magnetfeld von zwei Spulen 5 erzeugt wird. Die zweite Spule 5 ist auf der der ersten Spule 5 gegenüberliegenden Seite der Polschuhplatten 6, 7 angeordnet, sodass die zweiten Seiten 10 der Polschuhplatten 6, 7 der zweiten Spule 5 zugewandt sind. Zur Einspeisung des Magnetfeldes, das die zweite Spule 5 erzeugt, sind an den zweiten Seiten 10 der Polschuhplatten 6, 7 jeweils zwei weitere Einspeisebereiche 11 pro Polschuhplatte 6, 7 ausgebildet. Insgesamt werden also zwei Spulen 5 zur Erzeugung des Magnetfeldes verwendet, wobei insgesamt pro Polschuhplatte 6, 7 vier Einspeisebereiche 11 ausgebildet sind. Die zweite Spule 5 ist ebenfalls über jeweils ein Y-förmiges Jochelement 12 an den Einspeisebereichen 11 mit den Polschuhplatten 6, 7 verbunden. Die Spulen 5 sind als lange Spulen ausgestaltet.

Bei der in den Fig. 1 und 2 dargestellten Ausgestaltung der Magnetkreisvorrichtung 3 ist die Spule 5, bzw. sind die Spulen 5 in unmittelbarer Nähe zu den Elektroden 4 angeordnet, nämlich in Strömungsrichtung gesehen auf einer Höhe mit den Elektroden 4 angeordnet. Durch die unmittelbare Nähe der Spulen 5 zu den Elektroden 4 kann es im Betrieb des magnetisch-induktiven Durchflussmessgerätes 1 zu einer Beeinflussung der Elektroden 4 durch die Streufelder der Spulen 5 kommen. Eine derartige Beeinflussung kann dadurch minimiert werden, dass um die Spulen 5 ein abschirmendes Metallgehäuse angeordnet ist. Das Metallgehäuse ist bevorzugt so ausgebildet, dass es die unerwünschten Streufelder aufnimmt und in die Polschuhplatten 6, 7 einkoppelt. Das Metallgehäuse ist in den Figuren nicht dargestellt.

Fig. 3 zeigt eine weitere Ausgestaltung einer Magnetkreisvorrichtung 3 mit zwei Spulen 5. Im Unterschied zu der in Fig. 2 dargestellten Ausgestaltung sind die beiden Spulen 5 nicht mittig der zweiten Seite 9 der Polschuhplatten 6, 7 angeordnet, sondern - in Strömungsrichtung gesehen - auf einer Höhe mit einem Einspeisepunkt 11 angeordnet. Bei einer derartigen Anordnung der Spulen 5 ergibt sich der Vorteil, dass die Beeinflussung der Elektroden 4 durch die Spulen 5 minimiert wird, da der Abstand zwischen Elektroden 4 und Spulen 5 vergrößert wird.

Elektrode 4 und Spule 5 sind in Strömungsrichtung gesehen hintereinander und nicht auf gleicher Höhe angeordnet. Die Jochelemente 12 sind in der Ausgestaltung h-förmig ausgebildet.

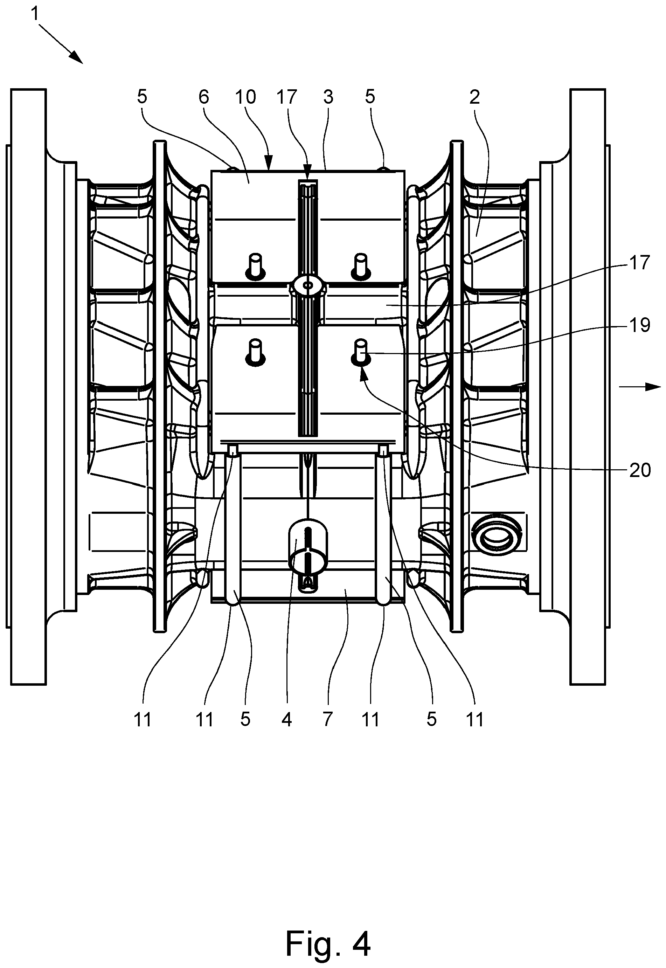

In Fig. 4 ist eine weitere Ausgestaltung eines magnetisch-induktiven Durchflussmessgerätes 1 dargestellt, wobei das magnetisch-induktive Durchflussmessgerät 1 ein Messrohr 2 und eine Magnetkreisvorrichtung 3 aufweist. Zur Abgreifung der Messspannung sind ebenfalls Elektroden 4 vorgesehen. Die Magnetkreisvorrichtung 3 ist in der dargestellten Perspektive besonders gut ersichtlich. Die Magnetkreisvorrichtung 3 weist insgesamt vier Spulen 5 auf, die zur Erzeugung des Magnetfeldes ausgebildet sind. Zwei der Spulen 5 sind auf der ersten Seite 9 der Polschuhplatten 6, 7 angeordnet, die beiden anderen Spulen 5 sind auf der zweiten Seite 10 der Polschuhplatten 6, 7 angeordnet. Jeweils beide Spulen 5 auf jeder Seite der Polschuhplatten 6, 7 sind in Strömungsrichtung gesehen hintereinander und parallel zueinander angeordnet. Die Elektrode 4, bzw. die Elektroden 4 sind auf jeder Seite zwischen den beiden Spulen 5 angeordnet, also in Strömungsrichtung gesehen hinter der ersten Spule 5 und vor der zweiten Spule 5 angeordnet, wobei bevorzugt und dargestellt die Spulen 5 im gleichen Abstand zu der Elektrode angeordnet sind. Jede der Spulen 5 ist über einen Einspeisebereich 11 mit den Polschuhplatten 6, 7 verbunden. Jede der Spulen 5 ist also über einen Einspeisebereich 11 mit der ersten Polschuhplatte 6 und über einen weiteren Einspeisebereich 11 mit der zweiten Polschuhplatte 7 verbunden. Nicht dargestellt, aber dennoch von der Erfindung umfasst ist, dass jede der vier Spulen 5 über mehr als einen Einspeisebereich 11 mit den Polschuhplatten 6, 7 verbunden ist. Das kann beispielsweise durch die Verwendung von Y-förmigen Jochelementen - wie in den Fig. 1 bis 3 dargestellt - realisiert werden.

Wie in den Figuren zu sehen ist, sind die Spulen 5 als lange Spulen ausgebildet. Eine lange Spule zeichnet sich dadurch aus, dass die Länge 1 der Spule einem Vielfachen des Durchmessers der Spule entspricht, nämlich insbesondere, dass die Länge 1 der Spule wenigstens dem Zehnfachen des Durchmessers entspricht. Hierdurch ergibt sich ein homogenes Magnetfeld im Inneren der Spule. Ferner treten deutlich geringere unerwünschte Streufelder auf, was sich positiv auf die Störanfälligkeit auswirkt und die Energieeffizienz erhöht. Ferner kann aufgrund der Verwendung von langen Spulen auf Abschirmmaßnahmen für auftretende Streufelder verzichtet werden oder können diese Abschirmmaßnahmen deutlich vereinfacht werden.

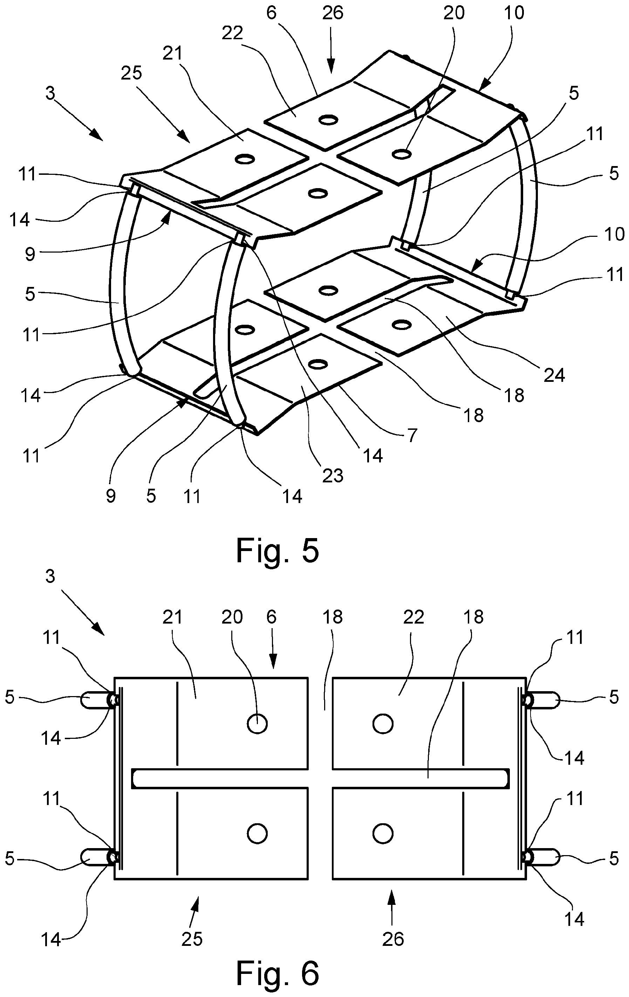

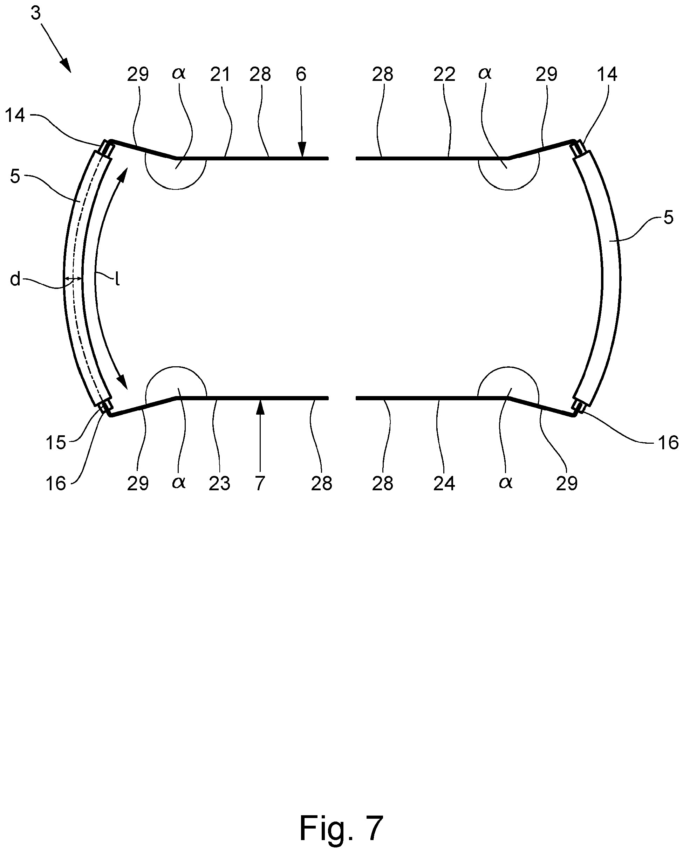

Wie zudem insbesondere in den Fig. 5 und 7 ersichtlich, sind die Spulen 5 kreisbogenförmig ausgebildet. Der Radius des Kreisbogens ist an die Messrohrgeometrie, nämlich an den Außenradius des bogenförmigen Bereichs des Messabschnitts 8 des Messrohres 2 angepasst, sodass die Spulen 5 eng an das Messrohr 2 angeordnet werden können, sodass sich insgesamt eine Magnetkreisvorrichtung 3 bilden lässt, die sehr nah an den Messabschnitt 8 des Messrohres 2 angegliedert ist. Hierdurch können kompakte magnetisch-induktive Durchflussmessgeräte 1 auf einfache Art und Weise gebildet werden. Die Spulen 5 weisen einen Spulenkern 14 auf, der im Wesentlichen von den Windungen der Spulen 5 umschlossen ist und einen unwesentlichen Teil über die Windungen der Spule hinausragt. Der hinausragende Teil des Spulenkerns 14 ist in der Fig. 7 gut sichtbar dargestellt. Um die Anzahl der Verbindungsstellen in der Magnetkreisvorrichtung 3 und damit potentielle Quellen für Wirbelfelder bzw. magnetische Streufelder zu reduzieren, ist in der dargestellten Ausgestaltung der Polschuhkern 14 direkt mit den Polschuhplatten 6, 7 verbunden. Hierzu weisen die Spulenkerne 14 an ihren Enden jeweils Ausnehmungen 15 auf, die schlitzförmig ausgebildet sind und in die die Polschuhplatten 6, 7 eingeführt sind. Die Polschuhplatten 6, 7 weisen also einen Verbindungsabschnitt 16 auf, der mit den Spulenkernen 14 verbunden ist. Im dargestellten Ausführungsbeispiel ist der Verbindungsabschnitt 16 der Polschuhplatten 6, 7 gebogen ausgebildet.

Zur Verstärkung des Messabschnitts 8 sind an dem Messrohr 2 im Bereich des Messabschnitts 8 Verstärkungsrippen 17 ausgebildet. Die Polschuhplatten 6, 7 der Magnetkreisvorrichtung 3 weisen entsprechende Ausnehmungen 18 zur Aufnahme der Verstärkungsrippen 17 auf. Diese Ausnehmungen 18 für die Verstärkungsrippen sind besonders gut in den Fig. 5 und Fig. 6 ersichtlich, in der die in Fig. 4 dargestellte Magnetkreisvorrichtung 3 in weiteren perspektivischen Ansichten dargestellt ist. Durch die Ausbildung von Ausnehmungen 18 für die Verstärkungsrippen 17 kann gewährleistet werden, dass die Polschuhplatten 6, 7 sehr nah am Messabschnitt 8 und damit nah zueinander angeordnet sind, sodass die Homogenität des sich zwischen den Polschuhplatten 6, 7 bildenden Magnetfeldes verbessert wird. Zudem wird durch die Ausnehmungen 18 die Ausbildung von Streufeldern und von Wirbelströmen reduziert, wodurch die Homogenität des sich zwischen den Polschuhplatten 6, 7 bildenden Magnetfeldes weiter verbessert wird.

Zur Fixierung und Positionierung der Magnetkreisvorrichtung 3 am Messrohr 2 sind Positionierelemente 19 vorgesehen, wie sie insbesondere in Fig. 4 ersichtlich sind. Insgesamt sind pro Seite, nämlich pro Polschuhplatte 6, 7 vier Positionierelemente 19 vorgesehen. Die Polschuhplatten 6, 7 weisen entsprechende Positionierausnehmungen 20 auf, durch die die Positionierelemente 19 geführt werden. Auch durch die Ausbildung der Positionierausnehmungen 20 wird die Ausbildung von Streufeldern und Wirbelströmen reduziert.

Besonders vorteilhaft ist eine derartige Ausgestaltung, bei der die Polschuhplatten 6, 7 zweiteilig ausgebildet sind, nämlich wo die erste Polschuhplatte 6 eine erste Polschuhteilplatte 21 und eine zweite Polschuhteilplatte 22 aufweist und wobei die zweite Polschuhplatte 7 eine erste Polschuhteilplatte 23 und eine zweite Polschuhteilplatte 24 aufweist. Die erste Polschuhteilplatte 21 der ersten Polschuhplatte 6 ist über die Spulen 5 mit der ersten Polschuhteilplatte 23 der zweiten Polschuhplatte 7 verbunden. Die zweite Polschuhteilplatte 22 der ersten Polschuhplatte 6 ist über die anderen beiden Spulen 5 mit der zweiten Polschuhteilplatte 24 der zweiten Polschuhplatte 7 verbunden. Insgesamt ist die gesamte Magnetkreisvorrichtung 3 damit zweistückig ausgebildet, also durch ein erstes Teilstück 25 und ein zweites Teilstück 26 gebildet, die nicht miteinander verbunden sind. Diese Ausgestaltung hat den Vorteil, dass die Montage der Magnetkreisvorrichtung erheblich vereinfacht wird. Die beiden Teilstücke 25, 26 können beispielsweise auf den Messabschnitt 8 des Messrohres 2 aufgesteckt werden. Nach dem Aufstecken der beiden Teilstücke 25, 26 können dann die Positionierelemente 19 durch die Positionieröffnungen 20 mit dem Messrohr 2 verbunden werden. Alternativ können die Positionierelemente 19 mit dem Messrohr 2 verbunden oder einstückig mit diesem hergestellt sein und die Teilstücke 25, 26 beim Aufstecken auf den Messabschnitt 8 des Messrohres 2 mit den Positionierelementen 19 verrasten. So sind die beiden Teilstücke 25, 26 der Magnetkreisvorrichtung 3 am Messrohr 2 fixiert und können keine wesentlichen Relativbewegungen zum Messrohr 2 mehr durchführen. Die Zweiteilung der Magnetkreisvorrichtung 3 ist insbesondere in den Fig. 5 und 6 sehr gut ersichtlich. Fig. 5 zeigt eine perspektivische Ansicht der Magnetkreisvorrichtung 3, in Fig. 6 ist eine Draufsicht auf die Magnetkreisvorrichtung 3 dargestellt.

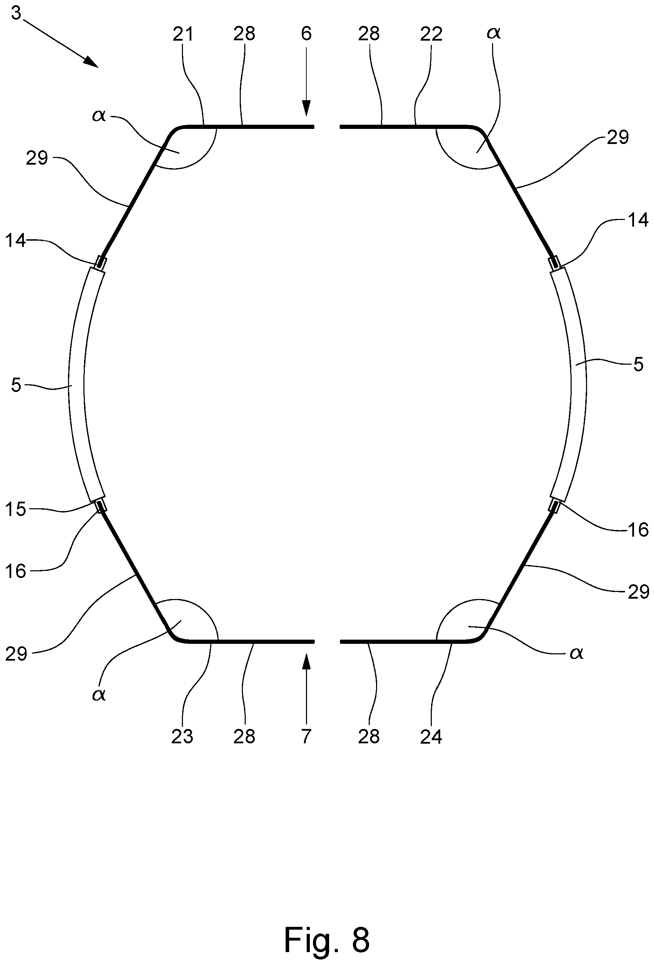

Magnetisch-induktive Durchflussmessgeräte 1 können Messrohre 2 mit Messabschnitten mit verschiedenen Geometrien aufweisen. Der in den Fig. 1 und 4 dargestellte Messabschnitt 8 des Messrohres 2 ist rechteckig ausgebildet, weist also einen rechteckigen Strömungsquerschnitt auf. Insbesondere weist er zwei Flachseiten auf, an denen die Polschuhplatten angeordnet sind. In einer anderen Ausgestaltung weist der Messabschnitt 8 des Messrohres 2 einen runden Strömungsquerschnitt auf. In der Fig. 7 ist eine Magnetkreisvorrichtung 3 dargestellt, die vorteilhaft für die Verwendung eines Messrohres 2 mit einem Messabschnitt 8 mit rechteckigem Strömungsquerschnitt ausgebildet ist, wohingegen in Fig. 8 eine Magnetkreisvorrichtung 3 dargestellt ist, die vorteilhaft für die Verwendung eines Messrohres 2 mit einem Messabschnitt 8 mit rundem Strömungsquerschnitt ausgebildet ist.

Die Polschuhteilplatten 21, 22, 23, 24 sind bei beiden Ausgestaltungen jeweils in einen ersten Abschnitt 28 und einen zweiten Abschnitt 29 unterteilt. Der erste Abschnitt 28 und der zweite Abschnitt 29 sind unter einem Innenwinkel α zueinander angeordnet. Unter dem Innenwinkel α wird der Winkel zwischen dem ersten Abschnitt 28 und dem zweiten Abschnitt 29 auf der dem zwischen den Polschuhplatten 6, 7 angeordneten Messrohr 2 zugewandten Seite der Polschuhteilplatten 21, 22, 23, 24 verstanden. Der Innenwinkel α wird bevorzugt dadurch realisiert, dass der erste Abschnitt 28 vom zweiten Abschnitt 29 weggebogen ist. Bei der in Fig. 7 dargestellten Magnetkreisvorrichtung 3 sind die Innenwinkel α größer 180°. Hierdurch ergibt sich eine näherungsweise rechteckige Form der Magnetkreisvorrichtung 3. Bei der in Fig. 8 dargestellten Magnetkreisvorrichtung 3 sind die Innenwinkel α kleiner als 180°. Hierdurch ergibt sich eine näherungsweise runde Form der Magnetkreisvorrichtung 3.

Auch die in den Fig. 2 und 3 dargestellten Magnetkreisvorrichtungen 3 weisen einen Innenwinkel α größer 180° zwischen erstem Abschnitt 28 und zweitem Abschnitt 29 auf. Da die Polschuhplatten 6,7 einstückig ausgebildet sind, weist hier eine Polschuhplatte 6, 7 einen ersten Abschnitt 28 und zwei zweite Abschnitte 29 auf, die beidseitig an den ersten Abschnitt 28 angrenzen. Die dargestellten Magnetkreisvorrichtungen 3 sind entsprechend für Messrohre 2 mit rechteckigem Strömungsquerschnitt des Messabschnitts 8 ausgebildet.

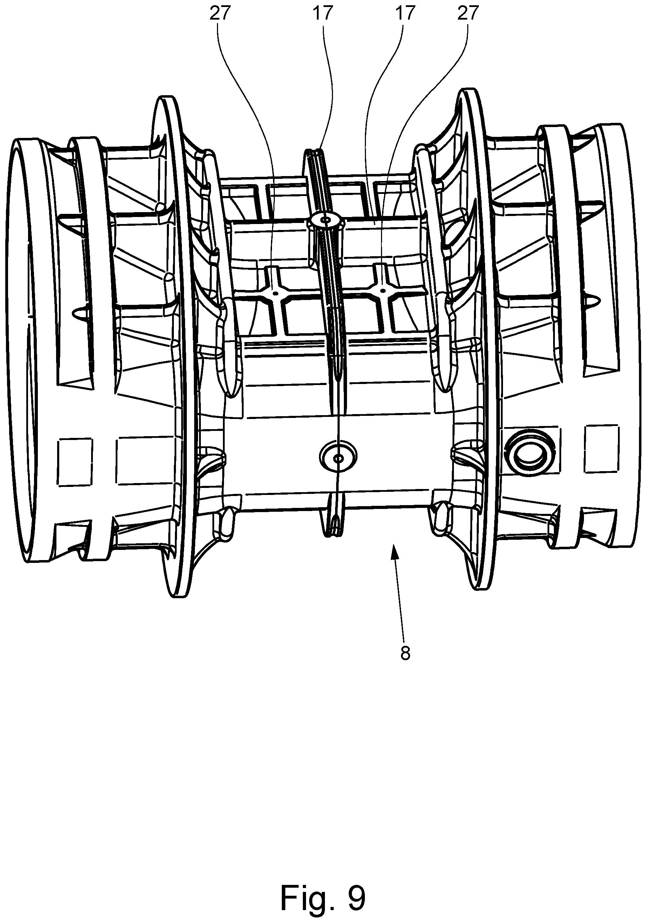

Fig. 9 zeigt eine Darstellung des Messrohres 2 des magnetisch-induktiven Durchflussmessgerätes 1. Hier ist besonders gut der rechteckige Messabschnitt 8 ersichtlich, der die Verstärkungsrippen 17 aufweist, wobei die Verstärkungsrippen 17 kreuzförmig an den Messabschnitt 8 ausgebildet sind. Zudem sind Befestigungsabschnitte 27 zur Befestigung der Positionierelemente 19 ersichtlich. Bevorzugt können diese Positionierelemente 19 beispielsweise in das Messrohr 2 eingeschraubt werden, wobei die Befestigungsabschnitte 27 dann zu an den Positionierelementen 19 ausgebildeten Gewinden korrespondierende Gegengewinde aufweisen.

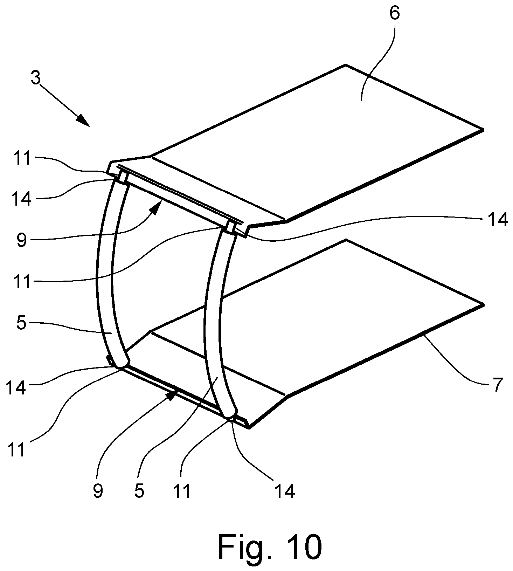

Fig. 10 zeigt eine weitere Darstellung einer Magnetkreisvorrichtung 3. Die Magnetkreisvorrichtung 3 weist zwei Polschuhplatten 6, 7 und zudem zwei Spulen 5 auf. Die Spulen 5 sind beide an der ersten Seite 9 der Polschuhplatten 6, 7 angeordnet. In dem dargestellten Beispiel sind die Polschuhplatten 6, 7 so ausgebildet, dass sie keine zusätzlichen Positionierausnehmungen 20 aufweisen. Zwar nicht dargestellt, jedoch auch Teil der Erfindung sind sämtliche Ausgestaltungen der Polschuhplatten 6, 7, wie sie oben beschrieben sind in Kombination mit den beiden an der ersten Seite 9 der Polschuhplatten 6, 7 angeordneten Spulen.

### Bezugszeichen

- 1: magnetisch-induktives Durchflussmessgerät
- 2: Messrohr
- 3: Magnetkreisvorrichtung
- 4: Elektroden
- 5: Spulen
- 6: erste Polschuhplatte
- 7: zweite Polschuhplatte
- 8: Messabschnitt
- 9: erste Seite der Polschuhplatte
- 10: zweite Seite der Polschuhplatte
- 11: Einspeisebereich
- 12: Jochelement
- 14: Spulenkern
- 15: Ausnehmung
- 16: Verbindungsabschnitt der Polschuhplatte
- 17: Verstärkungsrippe
- 18: Ausnehmung für die Verstärkungsrippe
- 19: Positionierelement
- 20: Positionierausnehmung
- 21: erste Polschuhteilplatte der ersten Polschuhplatte
- 22: zweite Polschuhteilplatte der ersten Polschuhplatte
- 23: erste Polschuhteilplatte der zweiten Polschuhplatte
- 24: zweite Polschuhteilplatte der zweiten Polschuhplatte
- 25: erstes Teilstück der Magnetkreisvorrichtung
- 26: zweites Teilstück der Magnetkreisvorrichtung
- 27: Befestigungsabschnitt für die Positionierelemente
- 28: erster Abschnitt
- 29: zweiter Abschnitt

## Patentansprüche

1. Magnetkreisvorrichtung (3) für ein magnetisch-induktives Durchflussmessgerät (1), zur Erzeugung und zur Führung eines Magnetfeldes, mit wenigstens einer ersten Spule (5) zur Erzeugung des Magnetfeldes und einer ersten Polschuhplatte (6) und einer zweiten Polschuhplatte (7), wobei sich zwischen den Polschuhplatten (6, 7) das Magnetfeld ausbildet und wobei zwischen den Polschuhplatten (6, 7) ein Messrohr (2) angeordnet werden kann, wobei
jede Polschuhplatte (6, 7) eine der ersten Spule (5) zugewandte erste Seite (9) und eine der ersten Seite (9) gegenüberliegende zweite Seite (10) aufweist und wobei zur Einspeisung des Magnetfeldes in die Polschuhplatten (6, 7) an den ersten Seiten (9) der Polschuhplatten (6, 7) jeweils wenigstens zwei Einspeisebereiche (11) pro Polschuhplatte (6, 7) ausgebildet sind,
**dadurch gekennzeichnet,**
**dass** die Spule (5) als lange Spule ausgebildet ist, wobei die Länge (1) der Spule (5) wenigstens dem Zehnfachen des Durchmessers der Spule (d) entspricht.

2. Magnetisch-induktives Durchflussmessgerät (1), mit einem Messrohr (2) zum Führen eines elektrisch leitfähigen Mediums, mit einer außerhalb des Messrohrs (2) verlaufenden Magnetkreisvorrichtung (3) nach Anspruch 1 zur Erzeugung und zur Führung eines das Messrohr (2) zumindest teilweise senkrecht zur Strömungsrichtung des Mediums durchsetzenden Magnetfeldes und mit zwei Elektroden (4) zum Abgreifen einer in dem Medium induzierten Messspannung, wobei das Messrohr (2) zwischen den beiden Polschuhplatten (6, 7) der Magnetkreisvorrichtung (3) angeordnet ist und wobei die Elektroden (4) auf einander gegenüberliegenden Seiten des Messrohres (2) angeordnet sind und eine gedachte Verbindungslinie zwischen den beiden Elektroden (4) senkrecht zur Strömungsrichtung und senkrecht zur Magnetfeldrichtung verläuft.

3. Magnetisch-induktives Durchflussmessgerät (1) nach Anspruch 2, **dadurch gekennzeichnet, dass** die Einspeisebereiche (11) jeweils im äußeren Viertel der Längserstreckung der ersten Seiten (9) der Polschuhplatten (6, 7) ausgebildet sind.

4. Magnetisch-induktives Durchflussmessgerät (1) nach Anspruch 2 oder 3, **dadurch gekennzeichnet, dass** die erste Spule (5) auf der Seite einer Elektrode (4) angeordnet ist und über je ein Y-förmiges Jochelement (12) an den Einspeisebereichen (11) mit den Polschuhplatten (6, 7) verbunden ist.

5. Magnetisch-induktives Durchflussmessgerät (1) nach einem der Ansprüche 2 bis 4, **dadurch gekennzeichnet, dass** die Magnetkreisvorrichtung (3) eine zweite Spule (5) aufweist, sodass das das Messrohr (2) durchsetzende Magnetfeld von zwei Spulen (5) erzeugt wird, dass die zweite Spule (5) als lange Spule (5) ausgebildet ist und auf der der ersten Spule (5) gegenüberliegenden Seite der Polschuhplatten (6, 7) angeordnet ist, sodass die zweiten Seiten (10) der Polschuhplatten (6, 7) der zweiten Spule (5) zugewandt sind, und dass zur Einspeisung des Magnetfeldes in die Polschuhplatten (6, 7) an den zweiten Seiten (10) der Polschuhplatten (6, 7) jeweils wenigstens zwei weitere Einspeisebereiche (11) pro Polschuhplatte (6, 7) ausgebildet sind.

6. Magnetisch-induktives Durchflussmessgerät (1) nach einem der Ansprüche 2 bis 4, **dadurch gekennzeichnet, dass** die Magnetkreisvorrichtung (3) eine zweite Spule (5) aufweist, sodass das das Messrohr (2) durchsetzende Magnetfeld von zwei Spulen (5) erzeugt wird und dass die zweite Spule als lange Spule (5) ausgebildet ist und auf der gleichen Seite der Polschuhplatten (6, 7) angeordnet ist, wie die erste Spule (5).

7. Magnetisch-induktives Durchflussmessgerät (1) nach einem der Ansprüche 2 bis 6, **dadurch gekennzeichnet, dass** die Magnetkreisvorrichtung (3) vier Spulen (5) aufweist, sodass das das Messrohr (2) durchsetzende Magnetfeld von vier Spulen (5) erzeugt wird, dass die Spulen (5) als lange Spulen ausgebildet sind, dass jeweils zwei Spulen (5) auf der Seite jeweils einer Elektrode (4) in Strömungsrichtung gesehen hintereinander angeordnet sind, und dass jede Spule (5) zumindest mittelbar über einen Einspeisebereich (11) mit der ersten Polschuhplatte (6) und mit der zweiten Polschuhplatte (7) verbunden ist, insbesondere dass die beiden Spulen (5) einer jeden Seite parallel zueinander angeordnet sind, insbesondere dass in Strömungsrichtung gesehen jede Elektrode (4) jeweils zwischen den Spulen (5) einer Seite angeordnet ist.

8. Magnetisch-induktives Durchflussmessgerät (1) nach einem der Ansprüche 2 bis 7, **dadurch gekennzeichnet, dass** die Spule (5) oder die Spulen (5) bogenförmig ausgebildet ist/sind.

9. Magnetisch-induktives Durchflussmessgerät (1) nach Anspruch 7 oder 8, **dadurch gekennzeichnet, dass** die Spulen (5) unmittelbar mit den Polschuhplatten (6, 7) verbunden sind, insbesondere dass die Spulen (5) jeweils einen Spulenkern (14) aufweisen und dass der Spulenkern (14) mit den Polschuhplatten (6, 7) verbunden ist.

10. Magnetisch-induktives Durchflussmessgerät (1) nach einem der Ansprüche 2 bis 9, **dadurch gekennzeichnet, dass** das Messrohr (1) einen rechteckigen Messabschnitt (8) aufweist, wobei die Polschuhplatten (6, 7) an den Längsseiten des Messabschnitts (8) angeordnet sind, dass das Messrohr (2) Verstärkungsrippen (17) aufweist und dass in den Polschuhplatten (6, 7) zu den Verstärkungsrippen (17) korrespondierende Ausnehmungen (18) für die Verstärkungsrippen (17) ausgebildet sind.

11. Magnetisch-induktives Durchflussmessgerät (1) nach einem der Ansprüche 2 bis 10, **dadurch gekennzeichnet, dass** das Messrohr (2) Positionierelemente (19) aufweist und dass in den Polschuhplatten (6, 7) Positionierausnehmungen (20) für die Positionierelemente (19) ausgebildet sind.

12. Magnetisch-induktives Durchflussmessgerät (1) nach einem der Ansprüche 2 bis 11, **dadurch gekennzeichnet, dass** die erste Polschuhplatte (6) und die zweite Polschuhplatte (7) jeweils aus einer ersten Polschuhteilplatte (21, 23) und aus einer zweiten Polschuhteilplatte (22, 24) gebildet sind, dass die erste Polschuhteilplatte (21) der ersten Polschuhplatte (6) und die erste Polschuhteilplatte (23) der zweiten Polschuhplatte (7) miteinander verbunden sind, insbesondere über eine oder mehrere Spulen (5) und/oder ein oder mehrere magnetfeldführende Jochelemente (12) miteinander verbunden sind und dass die zweite Polschuhteilplatte (22) der ersten Polschuhplatte (6) und die zweite Polschuhteilplatte (24) der zweiten Polschuhplatte (7) miteinander verbunden sind, insbesondere über eine oder mehrere Spulen (5) und/oder ein oder mehrere magnetfeldführende Jochelemente (12) miteinander verbunden sind, sodass die Magnetkreisvorrichtung (3) insgesamt zweiteilig ausgebildet ist.

13. Magnetkreisvorrichtung (3) nach Anspruch 1, **dadurch gekennzeichnet, dass** die Magnetkreisvorrichtung (3) gemäß einem der die Magnetkreisvorrichtung (3) charakterisierenden Merkmale der Ansprüche 3 bis 12 ausgebildet ist.

## Claims

1. Magnetic circuit device (3) for a magnetic-inductive flowmeter (1), for generating and guiding a magnetic field, having at least one first coil (5) for generating the magnetic field and a first pole shoe plate (6) and a second pole shoe plate (7), wherein the magnetic field is formed between the pole shoe plates (6, 7) and wherein a measuring tube (2) can be arranged between the pole shoe plates (6, 7),
wherein each pole shoe plate (6, 7) has a first side (9) facing the first coil (5) and a second side (10) opposite the first side (9) and wherein the first sides (9) of the pole shoe plates (6, 7) are designed to feed the magnetic field into the pole shoe plates (6, 7),
**characterized in**
**that** the coil (5) is designed as a long coil, wherein the length (1) of the coil (5) corresponds to at least ten times the diameter (d) of the coil.

2. Magnetic-inductive flowmeter (1), with a measuring tube (2) for guiding an electrically conductive medium, with a magnetic circuit device (3) running outside the measuring tube (2) for generating and guiding a magnetic field passing through the measuring tube (2) at least partially perpendicular to the direction of flow of the medium according to claim 1, and with two electrodes (4) for tapping a measuring voltage induced in the medium, wherein the measuring tube (2) is arranged between the two pole piece plates (6, 7) and wherein the electrodes (4) are arranged on opposite sides of the measuring tube (2) and an imaginary connecting line between the two electrodes (4) runs perpendicular to the direction of flow and perpendicular to the direction of the magnetic field.

3. Magnetic-inductive flowmeter (1) according to claim 2, **characterized in that** the feed-in regions (11) are each formed in the outer quarter of the longitudinal extent of the first sides (9) of the pole piece plates (6, 7).

4. Magnetic-inductive flowmeter (1) according to claim 2 or 3, **characterized in that** the first coil (5) is arranged on the side of an electrode (4) and is connected to the pole piece plates (6, 7) via Y-shaped yoke elements (12) on each of the feed-in regions (11).

5. Magnetic-inductive flowmeter (1) according to any one of claims 2 to 4, **characterized in that** the magnetic circuit device (3) has a second coil (5) so that the magnetic field passing through the measuring tube (2) is generated by two coils (5), that the second coil (5) is arranged on the side of the pole piece plates (6, 7) opposite the first coil (5), 7) so that the second sides (10) of the pole piece plates (6, 7) face the second coil (5), and that for feeding the magnetic field into the pole piece plates (6, 7) at least two further feed-in regions (11) per pole piece plate (6, 7) are formed on the second sides (10) of the pole piece plates (6, 7).

6. Magnetic-inductive flowmeter (1) according to any one of claims 2 to 4, **characterized in that** the magnetic circuit device (3) has a second coil (5), so that the magnetic field passing through the measuring tube (2) is generated by two coils (5) and that the second coil is arranged on the same side of the pole piece plates (6, 7) as the first coil (5).

7. Magnetic-inductive flowmeter (1) according to any one of claims 2 to 6, **characterized in that** the magnetic circuit device (3) has four coils (5), so that the magnetic field passing through the measuring tube (2) is generated by four coils (5), **in that** the coils (5) are designed as long coils, **in that** in each case two coils (5) are arranged one behind the other on the side of in each case one electrode (4) as viewed in the direction of flow and **in that** each coil (5) is connected at least indirectly via a feed-in region (11) to the first pole shoe plate (6) and to the second pole shoe plate (7), in particular **in that** the two coils (5) of each side are arranged parallel to one another, in particular **in that** each electrode (4) is arranged in each case between the coils (5) of one side as viewed in the direction of flow.

8. Magnetic-inductive flowmeter (1) according to any one of claims 2 to 7, **characterized in that** the coil (5) or the coils (5) is/are arch-shaped.

9. Magnetic-inductive flowmeter (1) according to any one of claims 7 or 8, **characterized in that** the coils (5) are directly connected to the pole piece plates (6, 7), in particular that the coils (5) each have a coil core (14) and that the coil core (14) is connected to the pole piece plates (6, 7).

10. Magnetic-inductive flowmeter (1) according to any one of claims 2 to 9, **characterized in that** the measuring tube (1) has a rectangular measuring section (8), wherein the pole piece plates (6, 7) are arranged on the longitudinal sides of the measuring section (8), that the measuring tube (2) has reinforcing ribs (17), and that recesses (18) for the reinforcing ribs (17) are formed in the pole piece plates (6, 7), which recesses correspond to the reinforcing ribs (17).

11. Magnetic-inductive flowmeter (1) according to any one of claims 2 to 10, **characterized in that** the measuring tube (2) has positioning elements (19) and that positioning recesses (20) for the positioning elements (19) are formed in the pole piece plates (6, 7).

12. Magnetic-inductive flowmeter (1) according to any none of claims 2 to 11, **characterized in that** the first pole piece plate (6) and the second pole piece plate (7) are each formed from a first pole piece plate section (21, 23) and from a second pole piece plate section (22, 24), that the first pole piece plate section (21) of the first pole piece plate (6) and the first pole piece plate section (23) of the second pole piece plate (7) are connected to one another, in particular are connected to one another via one or more coils (5) and/or one or more yoke elements (12) guiding magnetic fields, and that the second pole piece plate section (22) of the first pole piece plate (6) and the second pole piece plate section (24) of the second pole piece plate (7) are connected to one another, in particular are connected to one another via one or more coils (5) and/or one or more yoke elements (12) guiding magnetic fields, so that the magnetic circuit device (3) is constructed in two parts overall.

13. Magnetic circuit device (3) according to claim 1, **characterized in that** the magnetic circuit device (3) is formed according to one of the features of claims 3 to 12 characterizing the magnetic circuit device (3).

## Revendications

1. Dispositif de circuit magnétique (3) pour un débitmètre à induction magnétique (1), destiné à la génération et au guidage d'un champ magnétique, comprenant au moins une première bobine (5) destinée à générer le champ magnétique et une première plaque polaire (6) et une deuxième plaque polaire (7), le champ magnétique se formant entre les plaques polaires (6, 7) et un tube de mesure (2) pouvant être disposé entre les plaques polaires (6, 7),
chaque plaque polaire (6, 7) possédant un premier côté (9) qui fait face à la première bobine (5) et un deuxième côté (10) opposé au premier côté (9) et au moins deux zones d'injection (11) par plaque polaire (6, 7) étant respectivement formées au niveau des premiers côtés (9) des plaques polaires (6, 7) de pièce polaire en vue de l'injection du champ magnétique dans les plaques polaires (6, 7),
**caractérisé en ce**
**que** la bobine (5) est réalisée sous la forme d'une bobine longue, la longueur (1) de la bobine (5) correspondant au moins à dix fois le diamètre de la bobine (d).

2. Débitmètre à induction magnétique (1), comprenant un tube de mesure (2) destiné au guidage d'un fluide électriquement conducteur, comprenant un dispositif de circuit magnétique (3) selon la revendication 1 qui s'étend à l'extérieur du tube de mesure (2) pour la génération et le guidage d'un champ magnétique qui traverse le tube de mesure (2) au moins partiellement perpendiculairement à la direction d'écoulement du fluide et comprenant deux électrodes (4) destinées à prélever une tension de mesure induite dans le fluide, le tube de mesure (2) étant disposé entre les deux plaques polaires (6, 7) du dispositif de circuit magnétique (3) et les électrodes (4) étant disposées sur des côtés opposés du tube de mesure (2) et une ligne de liaison imaginaire entre les deux électrodes (4) suivant un tracé perpendiculaire au sens de l'écoulement et perpendiculaire au sens du champ magnétique.

3. Débitmètre à induction magnétique (1) selon la revendication 2, **caractérisé en ce que** les zones d'injection (11) sont formées respectivement dans le quart extérieur de l'extension longitudinale des premiers côtés (9) des plaques polaires (6, 7).

4. Débitmètre à induction magnétique (1) selon la revendication 2 ou 3, **caractérisé en ce que** la première bobine (5) est disposée sur le côté d'une électrode (4) et est reliée aux plaques polaires (6, 7) à chaque fois par le biais d'un élément de culasse (12) en forme de Y au niveau des zones d'injection (11).

5. Débitmètre à induction magnétique (1) selon l'une des revendications 2 à 4, **caractérisé en ce que** le dispositif de circuit magnétique (3) possède une deuxième bobine (5), de sorte que le champ magnétique qui traverse le tube de mesure (2) est généré par deux bobines (5), **en ce que** la deuxième bobine (5) est réalisée sous la forme d'une bobine longue (5) et est disposée sur le côté des plaques polaires (6, 7) opposé à la première bobine (5), de sorte que les deuxièmes côtés (10) des plaques polaires (6, 7) font face à la deuxième bobine (5), et **en ce qu'**au moins deux zones d'injection (11) supplémentaires par plaque polaire (6, 7) sont respectivement formées au niveau des deuxièmes côtés (10) des plaques polaires (6, 7) en vue de l'injection du champ magnétique dans les plaques polaires (6, 7).

6. Débitmètre à induction magnétique (1) selon l'une des revendications 2 à 4, **caractérisé en ce que** le dispositif de circuit magnétique (3) possède une deuxième bobine (5), de sorte que le champ magnétique qui traverse le tube de mesure (2) est généré par deux bobines (5) et **en ce que** la deuxième bobine est réalisée sous la forme d'une bobine longue (5) et est disposée sur le même côté des plaques polaires (6, 7) que la première bobine (5).

7. Débitmètre à induction magnétique (1) selon l'une des revendications 2 à 6, **caractérisé en ce que** le dispositif de circuit magnétique (3) possède quatre bobines (5), de sorte que le champ magnétique qui traverse le tube de mesure (2) est généré par quatre bobines (5), **en ce que** les bobines (5) sont réalisées sous la forme de bobines longues, **en ce que** deux bobines (5) sont respectivement disposées l'une derrière l'autre sur le côté d'une électrode (4) respective, vues dans le sens de l'écoulement, et **en ce que** chaque bobine (5) est reliée au moins indirectement à la première plaque polaire (6) et à la deuxième plaque polaire (7) par le biais d'une zone d'injection (11), notamment **en ce que** les deux bobines (5) de chaque côté sont disposées parallèlement l'une à l'autre, en particulier **en ce que**, vu dans le sens d'écoulement, chaque électrode (4) est disposée respectivement entre les bobines (5) d'un côté.

8. Débitmètre à induction magnétique (1) selon l'une des revendications 2 à 7, **caractérisé en ce que** la bobine (5) ou les bobines (5) est/sont en forme d'arc.

9. Débitmètre à induction magnétique (1) selon la revendication 7 ou 8, **caractérisé en ce que** les bobines (5) sont reliées directement aux plaques polaires (6, 7), notamment **en ce que** les bobines (5) possèdent respectivement un noyau de bobine (14) et **en ce que** le noyau de bobine (14) est relié aux plaques polaires (6, 7).

10. Débitmètre à induction magnétique (1) selon l'une des revendications 2 à 9, **caractérisé en ce que** le tube de mesure (1) possède une portion de mesure (8) rectangulaire, les plaques polaires (6, 7) étant disposées sur les côtés longitudinaux de la portion de mesure (8), **en ce que** le tube de mesure (2) possède des nervures de renforcement (17) et **en ce que** des évidements (18) correspondant aux nervures de renforcement (17) sont formés dans les plaques polaires (6, 7) pour les nervures de renforcement (17).

11. Débitmètre à induction magnétique (1) selon l'une des revendications 2 à 10, **caractérisé en ce que** le tube de mesure (2) possède des éléments de positionnement (19) et **en ce que** des évidements de positionnement (20) pour les éléments de positionnement (19) sont formés dans les plaques polaires (6, 7).

12. Débitmètre à induction magnétique (1) selon l'une des revendications 2 à 11, **caractérisé en ce que** la première plaque polaire (6) et la deuxième plaque polaire (7) sont respectivement formées d'une première plaque polaire partielle (21, 23) et d'une deuxième plaque polaire partielle (22, 24), **en ce que** la première plaque polaire partielle (21) de la première plaque polaire (6) et la première plaque polaire partielle (23) de la deuxième plaque polaire (7) sont reliées entre elles, notamment par le biais d'une ou de plusieurs bobines (5) et/ou d'un ou de plusieurs éléments de culasse (12) guidant le champ magnétique, et **en ce que** la deuxième plaque polaire partielle (22) de la première plaque polaire (6) et la deuxième plaque polaire partielle (24) de la deuxième plaque polaire (7) sont reliées entre elles, notamment par le biais d'une ou de plusieurs bobines (5) et/ou d'un ou de plusieurs éléments de culasse (12) guidant le champ magnétique, de sorte que le dispositif de circuit magnétique (3) est réalisé globalement en deux parties.

13. Dispositif de circuit magnétique (3) selon la revendication 1, **caractérisé en ce que** le dispositif de circuit magnétique (3) est réalisé selon l'une des caractéristiques caractérisantes des revendications 3 à 12 qui caractérisent le dispositif de circuit magnétique (3).
